# EUROPEAN PATENT APPLICATION

(11) **EP 3 439 273 A1**
(43) Date of publication of application: **06.02.2019**
(21) Application number: 16895904.7
(22) Date of filing: 30.03.2016
(51) Int. Cl.: H04M 1/02

(54) **MOBILE TERMINAL**

(71) Applicant: Shenzhen Royole Technologies Co., Ltd., Shenzhen, Guangdong 518052 (CN)
(72) Inventor: XIA, Xinyuan, Shenzhen Guangdong 518052 (CN)
(74) Representative: Hamer, Christopher K.
(86) International application number: PCT/CN2016/077870
(87) International publication number: WO 2017/166123

(57) **Abstract**

A mobile terminal (100) includes a flexible touch screen (14) configured to receive a deformation signal, a driving device (2), and a controller (3). The driving device (2) is configured to support the flexible touch screen (14). The controller (3) is configured to control the driving device (2) to deform between a first state and a second state according to the deformation signal received. The mobile terminal (100) may automatically perform a bendable deformation from one state to another state cooperating with the controller (3) and the driving device (2), for example, from a normal mobile terminal to a wearable wristband. The mobile terminal (100) fully utilizes the bendable property thereof to enlarge an application scope of the mobile terminal (100).

## Description

### TECHNICAL FIELD

The present disclosure relates to electronic devices, and more particularly relates to a mobile terminal.

### BACKGROUND

With developments of sciences and technologies, displays have developed from a fixed state to a bendable state. However, limited by technologies, the existing bendable display is still applied at a lower level usually for satisfying the user for fun. Thus, the bendable property of the bendable display has not been really used so that the application scope of the bendable display is limited.

### SUMMARY

Embodiments of the present disclosure provide a mobile terminal with a wide application scope.

An embodiment of the present disclosure provides a mobile terminal. The mobile terminal includes a flexible touch screen configured to receive a deformation signal, a driving device, and a controller. The driving device supports the flexible touch screen. The controller controls the driving device to deform between a first state and a second state according to the deformation signal.

In at least one embodiment, the driving device includes a temperature controller and a memory alloy layer thermally connected to the temperature controller. The controller is configured to change a temperature of the temperature controller according to the deformation signal to drive the memory alloy layer to deform between the first state and the second state.

In at least one embodiment, a temperature conduction layer is arranged between the temperature controller and the memory alloy layer.

In at least one embodiment, the mobile terminal further includes a flexible connection layer arranged between the flexible touch screen and the memory alloy layer. The flexible connection layer is configured to prevent the heat of the memory alloy layer from transferring to the flexible touch screen.

In at least one embodiment, mobile terminal further includes a thermal insulation layer arranged between the flexible touch screen and the temperature controller.

In at least one embodiment, The memory alloy layer is arranged between the flexible connection layer and the thermal insulation layer.

In at least one embodiment, the driving device includes a first portion and a second portion. The first portion is deformable and the second portion is non-deformable. The first portion of the driving device deforms and the second portion of the driving device remains an original state on a condition that the first state and the second state each are switched towards another.

In at least one embodiment, the memory alloy layer includes a first portion and a second portion. The first portion of the memory alloy layer is deformable and the second portion of the memory alloy layer is non-deformable. The first portion of the memory alloy layer deforms and the second portion of the memory alloy layer remains an original state on a condition that the first state and the second state each are switched toward another.

In at least one embodiment, the controller and the temperature controller are arranged at the first portion of the memory alloy layer. The flexible touch screen covers the first portion and the second portion.

In at least one embodiment, the controller and the temperature controller are respectively arranged at two opposite sides of the first portion of the memory alloy layer. The controller and the temperature controller move away from each other on a condition that the memory alloy layer is deformed from the first state to the second state. The controller and the temperature controller move towards each other on a condition that the memory alloy layer is deformed from the second state to the first state.

In at least one embodiment, the first portion of the memory alloy layer includes a pair of straight sections respectively located at an upper portion of the memory alloy layer and a lower portion of the memory alloy layer. The second portion of the memory alloy layer includes a pair of bendable sections respectively located at a left portion of the memory alloy layer and a right portion of the memory alloy layer.

In at least one embodiment, the mobile terminal further includes a switch for preventing misoperation. The switch is turned on in the second state and is turned off in the first state.

In at least one embodiment, the controller refuses to execute a deformation instruction after the switch is turned on.

In at least one embodiment, the switch includes a sensor operable for detect a human body. The controller determines whether to block the deformation of the driving device on a condition that whether the human body is sensed by the switch.

In at least one embodiment, the switch is a mechanical switch. On a condition that the first state is switched to the second state, the mechanical switch is automatically turned on.

In at least one embodiment, the mobile terminal is a mobile phone having two screens respectively at two opposite sides thereof in the first state. The mobile terminal is a wristband in the second state.

In at least one embodiment, the flexible touch screen surrounds the driving device to form a closed ring. The deformation signal includes a gesture sliding on two opposite touch surfaces of the flexible touch screen simultaneously.

In summary, the mobile terminal according to embodiments of the present disclosure may automatically perform a bendable deformation from one state to another state cooperating the controller with the driving device, for example, from the normal mobile terminal to the wearable wristband, which fully utilizes the bendable property of the mobile terminal. Thereby, the application scope of the mobile terminal is enlarged.

### BRIEF DESCRIPTION OF THE DRAWINGS

In order to more clearly illustrate the technical solution of the present application, the accompanying drawings required for describing the embodiments will be briefly described below. Apparently, the accompanying drawings in the following description are merely the embodiments of the present application, and other drawings may be obtained by those skilled in the art according to these accompanying drawings without paying any creative labor.
FIG. 1 is a schematic view of a mobile terminal according to a first embodiment of the present disclosure, showing the mobile terminal in a first state.
FIG.2 is a schematic view of a mobile terminal according to the first embodiment of the present disclosure, showing the mobile terminal in a second state.
FIG.3 is a cross-sectional view of an upper straight portion of the mobile terminal according to the first embodiment of the present disclosure.
FIG.4 is a cross-sectional view of a lower straight portion of the mobile terminal according to the first embodiment of the present disclosure.
FIG.5 is a cross-sectional view of an upper straight portion of the mobile terminal according to a second embodiment of the present disclosure.
FIG.6 is a cross-sectional view of a lower straight portion of the mobile terminal according to the second embodiment of the present disclosure.

### DETAILED DESCRIPTION OF ILLUSTRATED EMBODIMENTS

The embodiments of present disclosure will be clearly and completely described with reference to the accompanying drawings.

The embodiments of the mobile terminal refer to any devices having communication and storage functions, such as a tablet computer, a mobile phone, an e-reader, a remote controller, a personal computer (PC), a notebook computer, an in-vehicle device, an IPTV, or a wearable portable smart device.

In the description of the embodiments of the present disclosure, it should be understood that the terms "up", "down", "left", "right" "front surface", "back surface", and the like indicate the orientation or positional relationship based on the accompanying drawings. The orientation or positional relationships are merely for convenience of describing the present disclosure and simplify the description, and do not imply or indicate that the indicated apparatus or elements must have a particular orientation, be constructed and operated in a particular orientation, and therefore should not be construed to limit the present disclosure.

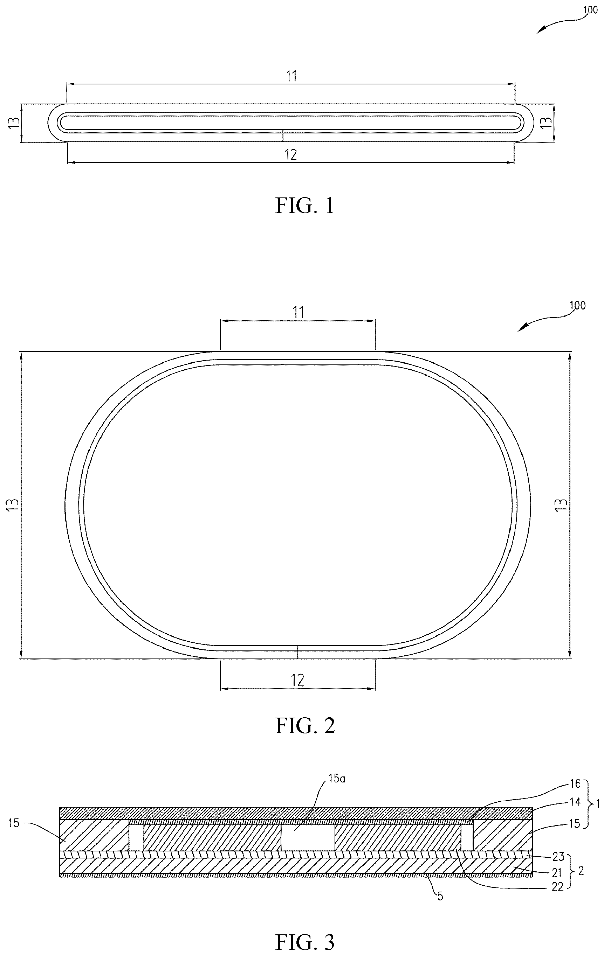

The embodiments of the present disclosure provide a mobile terminal with a wide application scope. Referring to FIG. 1 to FIG. 4, the mobile terminal 100 according to a first embodiment of the present disclosure includes a flexible screen assembly 1 configured to receive a deformation signal, a driving device 2, and a controller 3. The mobile terminal 100 may be connected end to end to form a closed ring. The flexible screen assembly 1 includes a front surface (namely, an outside surface) and a back surface (namely, an inside surface) arranged opposite to each other. The front surface of the flexible screen assembly 1 is a touch surface in whole and configured to input the deformation signal. That is, the mobile terminal 100 may be touched in 360 degrees.

It can be understood that in order to ensure the strength of the flexible screen assembly 1, the flexible screen assembly 1 includes a flexible touch screen 14 and a flexible connection layer 15. The flexible touch screen 14 is configured to receive the deformation signal. In the embodiment, the flexible connection layer 15 may be deformable together with the flexible touch screen 14. The flexible connection layer 15 is configured to support the flexible touch screen 14 and insulate heat. Thus, the flexible connection layer 15 is made of flexible and heat insulating material, such as a rubber, or a silicone. Therefore, an additional thermal insulating layer is not required to insulate heat. In other embodiments, the flexible screen assembly 1 may only include the flexible touch screen 14 and other supporting components may be configured to support the flexible touch screen 14.

The driving device 2 is configured to support the flexible touch screen 14. The controller 3 is configured to control the driving device 2 to deform between a first state and a second state according to the deformation signal received. The driving device 2 includes a temperature controller 22 and a memory alloy layer 21 thermally connected to the temperature controller 22. The memory alloy layer 21 is made of two-way shape memory alloy. In the first state, the memory alloy layer 21 is controlled to be at a first temperature (namely, a low temperature) and the mobile terminal is a mobile phone having two screens at two opposite sides thereof. In the second state, the memory alloy layer 21 is controlled to be at a second temperature (namely, a high temperature) and the mobile terminal is a wristband. It can be understood that the driving device 2 includes a first portion and a second portion, and the memory alloy layer 21 includes a first portion and a second portion. The first portions are deformable and the second portions are non-deformable. The first portion of the driving device 2 and the first portion of the memory alloy layer 21 are deformed on a condition that the first state and the second state each are switched towards another. The second portion of the driving device 2 and the second portion of the memory alloy layer 21 remain unchanged on a condition that the first state and the second state each are switched towards another. In the embodiment, the first portion of the memory alloy layer 21 includes an upper straight section 11 located at an upper portion of the memory alloy layer 21 and a lower straight section 12 located at a lower portion of the memory alloy layer 21, respectively. The second portion of the memory alloy layer 21 includes a pair of bendable sections 13 located at a left side of the memory alloy layer 21 and a right side of the memory alloy layer 21, respectively. That is, only the bendable sections 13 of the memory alloy layer 21 may be deformable and the straight sections 11, 12 of the memory alloy layer 32 remain unchanged. The upper straight section 11 and the lower straight section 12 are substantially planes mainly configured for a user to perform a touchable operation thereon. The two bendable sections 13 are configured to perform bendable deformations. A shape of the mobile terminal 100 varies with change of the bending degrees of the two bendable sections 13. For example, at a minimal bending degree, the mobile terminal 100 is in the second state. In the second state, the mobile terminal 100 is the wristband worn on the user's arm. At a maximal bending degree, the mobile terminal 100 is in the first state. In the first state, the mobile terminal 100 is the mobile phone having two screens respectively at two opposite sides thereof. That is, the mobile terminal 100 is in a normal state. It can be understood that the memory alloy layer 21 may be only arranged at the bendable sections 13 and ordinary metal material may be arranged at the straight sections 11, 12, for saving costs.

A temperature of the temperature controller 22 may be changed. The temperature is configured to be transferred to the memory alloy layer 21 to change a shape of the memory alloy layer 21 fitted on the temperature controller 22. In the embodiment, the temperature controller 22 is a thermoelectric element.

The thermoelectric element may be a thermoelectric cooling chip. The thermoelectric cooling chip may generate heat or cool according to a direction of a current flowing through the thermoelectric cool chip. For example, the thermoelectric cool chip generates heat with a forward current flowing therethrough, and the thermoelectric cool chip generates cool with a reverse current flowing therethrough. The heat generated by the thermoelectric cool chip is transferred to the memory alloy layer 21 so that the temperature of the memory alloy layer 21 is increased. On a condition that the temperature of the memory alloy layer 21 reaches the first temperature, the memory alloy layer 21 performs a first deformation. The thermoelectric cool chip is cooled when the reverse current flowing therethrough and then the temperature is transferred to the whole memory alloy layer 21. On a condition that the temperature of the memory alloy layer 21 reaches the second temperature, the memory alloy layer 21 performs a second deformation. In the embodiment, since the thermoelectric cooling chip may be made of hard and inflexible material, the thermoelectric cooling chip is arranged at the upper straight section 11. Of course, the thermoelectric cooling chip also may be arranged at the lower straight section 12 according to an actual need. Since the two bendable sections 13 are required to perform bendable deformations, the thermoelectric chip is not arranged at the two bendable sections 13. Thus, a structure of the mobile terminal 100 is optimized. In the other embodiments, the shape of the memory alloy layer 21 in the high temperature or in the low temperature may also be respectively set according to an actual situation. In other embodiments, on a condition that only one of the bendable sections 13 needs to deform, the driving device 2 may also be arranged at the corresponding one of the bendable sections 13.

It can be understood that a specific position relationship between the flexible screen assembly 1 and the driving device 2 is as follows. The flexible connection layer 15 is arranged between the flexible touch screen 14 and the memory alloy layer 21 to avoid the heat of the flexible connection layer 15 transferring to the flexible touch screen 14. In detail, the flexible touch screen 14, the flexible connection layer 15, and the memory alloy layer 21 are sequentially stacked together. The temperature controller 22 and the flexible connection layer 15 are arranged side by side. The temperature controller 22 is arranged at the upper straight section 11. In the embodiment, the flexible connection layer 15 is not a continuous layer in whole. The flexible connection layer 14 at the upper straight section 11 is broken and an upper space 15a is defined thereat for receiving the temperature controller 22 therein. The flexible connection layer 14 at the lower straight section 12 is broken and a lower space 15b is defined thereat for receiving the controller 3 therein. The flexible connection layer 15 located at the two bendable sections 13 is fitted on the back surface of the flexible touch screen 14 at the upper straight section 11. The temperature controller 22 is also fitted on the back surface of the flexible touch screen 14. That is, the temperature controller 22 and the flexible connection layer 15 are arranged side by side. A thermal insulation layer 16 is arranged between the temperature controller 22 and the back surface of the flexible touch screen 14, to further improve the reliability of the mobile terminal 100, to prevent the temperature controller 22 from transferring a great amount of heat to the flexible touch screen 14, and to prevent affecting the use of the touch screen 14. The material of the thermal insulation layer 16 may be the same as that of the flexible connection layer 15. That is, the thermal insulation layer 16 may be a portion of the flexible connection layer 15. The memory alloy layer 21 is stacked on the flexible connection layer 15 and the memory alloy layer 21 located at the upper straight section 11 is fitted on the temperature controller 22, to enable the temperature controller 22 to transfer the temperature to the memory alloy layer 21. Thus, the memory alloy layer 21 may be deformed at the two bendable sections 13. In other embodiments, the thermal insulation layer 16 located at the upper straight section 11 may be a portion of the flexible connection layer 15. The shape of the flexible connection layer 15 located at the upper straight section 11 is substantially an inverted "n". A recessed portion of the flexible connection layer 15 located at the upper straight section 11 is the upper space defined by the flexible connection layer 14 at the upper straight section 11, for receiving the temperature controller 22 therein.

It can be understood that the driving device 2 further includes a temperature conduction layer 23. The temperature conduction layer 23 is arranged between the memory alloy layer 21 and the temperature controller 22. The temperature conduction layer 23 may be a continuous layer, or may be only arranged at the upper straight section 11. In the embodiment, the temperature conduction layer 23 is a continuous layer stacked on the memory alloy layer 21, and the temperature conduction layer 23 is also connected to the flexible connection layer 15. The temperature conduction layer 23 at the upper straight section 11 is correspondingly fitted on the temperature controller 22, for uniformly transferring the temperature of the temperature controller 22 to the memory alloy layer 21 and for further improving the reliability of the mobile terminal 100. In detail, the temperature conduction layer 23 is made of flexible material with high thermal conductivity, such as a metal grid, or a carbon nanofilm.

The controller 3 is electrically connected to the temperature controller 22. In the embodiment, the controller 3 is arranged at the lower straight section 12. The controller 3 and the flexible connection layer 15 are arranged side by side, that is, the controller 3 is received in the lower space 15b. The controller 3 is fitted on the back surface of the flexible touch screen 14. The controller 3 controls the temperature of the temperature controller 22 according to the deformation signal. The memory alloy layer 21 corresponding to at least one of the bendable sections 13 is deformed according to the temperature. That is, the controller 3 and the temperature controller 22 are respectively located at the opposite sides of the first portion (namely, the upper straight section 11 and the lower straight section 12) of the memory alloy layer 21. The controller 3 and the temperature controller 22 move away from each other on a condition that the memory alloy layer 21 is deformed from the first state to the second state. The controller 3 and the temperature controller 22 move towards each other on a condition that the memory alloy layer 21 is deformed from the second state to the first state. In other embodiments, the controller 3 may also be arranged at the upper straight section 11 or other portions of the mobile terminal 100 as long as the controller 3 does not affect the deformation of the mobile terminal 100.

It can be understood that a gap is defined between the controller 3 and the driving device 2 to avoid the heat generated by the controller 3 affecting the deformation of the memory alloy layer 21. Thus, the reliability of the mobile terminal 100 is improved. In the embodiment, the controller 3 and the flexible connection layer 15 are arranged side by side at the lower straight section 12. The controller 3 is arranged between the temperature conduction layer 23 and the flexible touch screen 14. The memory alloy layer 21 is arranged on the temperature conduction layer 23. The gap between the controller 3 and the temperature conduction layer 23, is configured to avoid the heat generated by the controller 3 affecting the memory alloy layer 21 to further improve the reliability of the mobile terminal 100.

It can be understood that the mobile terminal 100 may further include a battery 4. The battery 4 and the controller 3 are arranged side by side. That is, the battery 4 and the controller 3 are both received in the lower space 15b. The battery 4 may be spaced from the temperature conduction layer 23 to avoid the heat generated by the battery 4 transferring to the memory alloy layer 21. It can be understood that the battery 4 may also be an external battery.

In summary, the overall structure of the mobile terminal 100 is as follows. The flexible touch screen 14, the flexible connection layer 15, the temperature conduction layer 23 and the memory alloy layer 21 are stacked sequentially. The temperature controller 22 and the flexible connection layer 15 are arranged side by side at the upper straight section 11. The controller 3, the battery 4, and the flexible connection layer 15 are arranged side by side at the lower straight section 12. The touch surface of the flexible touch screen 14 forms the front surface of the mobile terminal 100.

Furthermore, the mobile terminal 100 is deformed to the wristband worn on the arm. The mobile terminal 100 further includes a heat insulating layer 5 configured to avoid the heat of the memory alloy layer 21 transferring to the user to cause a bad user experience. The heat insulating layer 5 is stacked on the driving device 2 far away from the flexible screen assembly 1, to form the back surface of the mobile terminal 100. In detail, the material of the heat insulating layer 5 may be the same as that of the flexible connection layer 15. The heat insulating layer 5 is stacked on the memory alloy layer 21, to avoid the temperature of the memory alloy layer 21 directly transferring to the user.

Furthermore, for easier controlling and fully utilizing the smart property of the mobile terminal 100, the mobile terminal 100 is controlled to deform by a touch operation on the flexible touch screen 14. A physical switch may be arranged in the mobile terminal 100 to control the deformation of the mobile terminal 100. The deformation of the mobile terminal 100 controlled by the touch operation on the flexible touch screen 14 is described in detail as follows.

The flexible touch screen 14 may receive the deformation signal and send the deformation signal to the controller 3. The deformation signal includes a gesture sliding on the two opposite touch surfaces of the flexible touch screen 14 simultaneously.

A touch region corresponding to the deformation signal is confirmed by the controller 3. On a condition that the touch region is the two straight sections, the controller 3 sends a first deformation signal to the temperature controller 22 according to the touch region. Therefore, the temperature controller 22 controls the first temperature according to the first deformation signal. Therefore, the memory alloy layer 21 performs the first deformation according to the first temperature.

On a condition that the touch region is the two bendable sections 13, the controller 3 sends a second deformation signal to the temperature controller 22 according to the touch region. The temperature controller 22 controls the second temperature according to the second deformation signal. Therefore, the memory alloy layer 21 performs the second deformation according to the second temperature.

Specifically, the mobile terminal 100 may be deformed to the wristband worn on the user's arm. When the touch operation on the flexible touch screen 14 is a common touch operation, a wrong touch operation may easily occur. On a condition that the user wears the mobile terminal 100 on his or her arm and the wrong touch operation occurs, the mobile terminal 100 may pinch the user's arm during the deformation of the mobile terminal 100. Therefore, the touch operation to control the deformation of the mobile terminal 100 is required to be quite different from the common touch operation. Since the common touch operation is usually a one-sided touch, the touch operation for deforming the mobile terminal 100 may set to be a double-sided touch. For example, on a condition that the user slides on the upper straight section 11 and the lower straight section 12 simultaneously, the flexible touch screen 14 may receive the deformation signal and sends the deformation signal to the controller 3. On a condition that the controller 3 confirms that the deformation signal is caused by the touch operation on the upper straight section 11 and the lower straight section 12 simultaneously, the controller 3 sends the first deformation signal to the temperature controller 22. Thus, the temperature controller 22 controls the first temperature according to the first deformation signal. Thereby, the memory alloy layer 21 performs the first deformation according to the first temperature accordingly.

It can be understood that the two straight sections of the mobile terminal 100 have relatively large areas to easily be performed the above-mentioned touch operation on a condition that the mobile terminal 100 is the mobile phone having two screens respectively at two opposite sides thereof. The first deformation is a gradual expansion of the two bendable sections 13, which drives the mobile terminal 100 to deform to the wristband. That is, sliding on the upper straight section 11 and the lower straight section 12 simultaneously, the mobile terminal 100 is deformed from the normal state to the wristband worn on the user's arm.

Specifically, on a condition that the user slides downward on the two bendable sections 13 simultaneously, the flexible touch screen 14 receives the deformation signal and sends the deformation signal to the controller 3. On the condition that the controller 3 confirms the deformation signal is caused by the touch operation on the two bendable sections 13, the controller 3 sends the second deformation signal to the temperature controller 22. Thus, the temperature controller 22 controls the second temperature according to the second deformation signal. Thereby, the memory alloy layer 21 performs the second deformation according to the second temperature. It can be understood that the second deformation is a gradual retraction of the two bendable sections 13, which drives the mobile terminal 100 to deform to a long rectangular shape the mobile phone having two screens respectively at two opposite sides thereof. That is, sliding on the two bendable sections 13 simultaneously, the mobile terminal 100 is deformed from the wristband to the normal shape.

For a further improvement, the mobile terminal 100 further includes a switch for preventing misoperation. The switch is electronically connected to the controller 3. The switch is configured to block the first deformation or the second deformation. In an illustrated embodiment, the switch is turned on in the second state and turned off in the first state.

The switch is further configured to block the misoperation to improve the reliability of the mobile terminal 100.

In the embodiment, the switch may include a sensor operable to detect a human body. In the second state, the controller 3 blocks the deformation of the driving device 2 on a condition that the human body is sensed by the switch. In detail, the switch produces a sensing signal and sends the sensing signal to the controller 3. The controller 3 determines whether the mobile terminal 100 is worn on the human body according to the sensing signal. On a condition that the controller 3 determines that the mobile terminal 100 is worn on the human body according to the sensing signal, the controller 3 refuses to accept or execute a deformation instruction made on the flexible touch screen 14. Thus, the mobile terminal 100 remains as the wristband. In detail, the sensor may be an infrared sensor or a temperature sensor for sensing a temperature of the human body, a sensor for sensing a heart rate of the human body, or a sensor for sensing a blood pressure of the human body. On one hand, the sensor may senses a health data of the human body and the health data is directly reflected on the flexible touch screen 14. On the other hand, the mobile terminal 100 worn on the human body is sensed by the sensor. It can be understood that the switch may always be turned on. On a condition that the mobile terminal 100 worn on the human body is sensed by the sensor, the controller 3 will refuse to accept or execute the deformation instruction to deform the mobile terminal 100. On the contrary, only on a condition that the mobile terminal 100 worn on the human body is not sensed, the controller 3 controls the drive device 2 to deform according to the first deformation signal or the second deformation signal. It can be understood that the switch may be turned on after the controller 3 receives the deformation signal to detect a position of the mobile terminal 100 relative to the human body. Similarly, on a condition that the controller 3 confirms that the mobile terminal 100 is worn on the human body according to the sensing signal, the controller 3 refuses to execute the deformation instruction. That is, the deformation signal will be delayed for a period of time after the deformation signal is generated. After the sensing signal is confirmed by the controller 3, the deformation instruction will be executed or rejected. In this manner, the sensor operates for a short time and remains off for the rest of the time, which saves the power of the mobile terminal 100. Of course, in other embodiments, the switch may be a mechanical switch arranged at a sidewall of the mobile terminal 100. When the mobile terminal 100 is the wristband, the controller 3 controls the switch to be turned on automatically. At this time, a touch signal to deform the mobile terminal 100 from the wristband to the long rectangular state (i.e. flat plate) will be blocked by the switch. The mobile terminal 100 will deform only on a condition that the user manually turns off the switch.

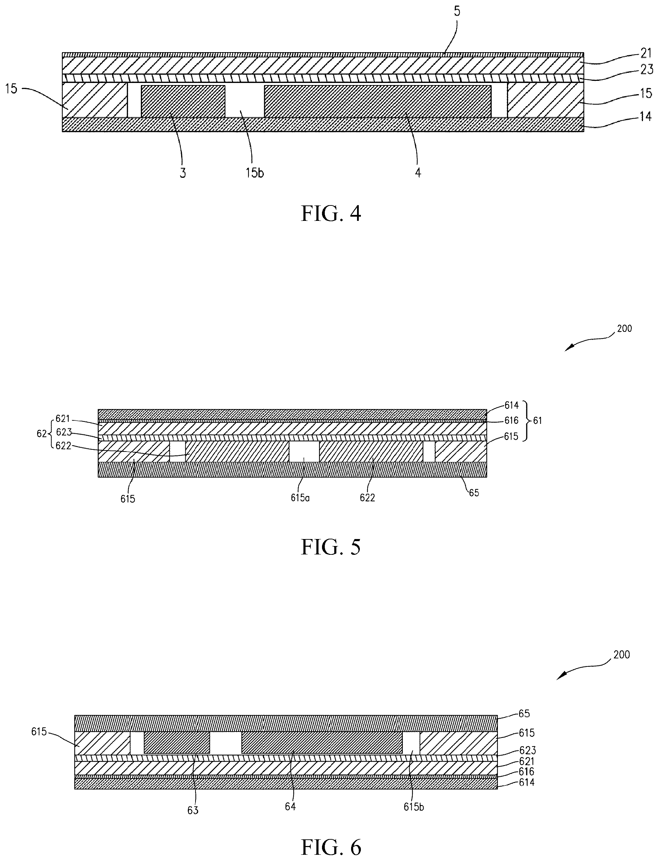

As illustrated in FIG. 5 to FIG. 6, a second embodiment of the present disclosure provides a mobile terminal 200 with a structure substantially same as the mobile terminal 100 provided by the first embodiment of the present disclosure. A difference between the mobile terminal 200 and the mobile terminal 100 is a specific positional relationship between the driving device 62 and the flexible screen assembly 61 of the mobile terminal 200. In detail, the flexible touch screen 614, the memory alloy layer 621, the temperature conduction layer 623, the flexible connection layer 615, and the thermal insulation layer 65 are sequentially stacked. The temperature controller 622 and the flexible connection layer 615 are arranged side by side. The temperature controller 622 is located at the upper straight section 11. A structure of the flexible connection layer 615 is the same as that of the flexible connection layer 15 of the first embodiment. The flexible connection layer 615 at the upper straight section 11 is broken and an upper space 615a is defined thereat for receiving the temperature controller 622 therein. The flexible connection layer 615 at the lower straight section 12 is broken and a lower space 615b is defined thereat for receiving the controller 63 therein. A thermal insulation layer 65 located at the upper straight section 11 is fitted on the temperature controller 622. The thermal insulation layer 65 located at the lower straight section 12 is fitted on the controller 63. The mobile terminal 200 with such a structure directly utilizes the memory alloy layer 621 to support the flexible touch screen 614 so that the user may achieve a better touch experience when the touch operation is performed on the flexible touch screen 614.

It can be understood that a heat insulating layer 616 is arranged between the flexible touch screen 614 and the memory alloy layer 621, to further prevent the temperature of the memory alloy layer 621 from transferring to the flexible touch screen 614. The material of the heat insulating layer 616 may be the same as that of the flexible connection layer 615.

The mobile terminal 100, 200 provided in the embodiments of the present disclosure is required to deform from the mobile phone having two screens respectively at two opposite sides thereof to the wristband. The user performs the touch operations on the upper straight section 11 and the lower straight section 12 simultaneously. The flexible touch screen 14, 614 receives the deformation signals according to the touch operations. The deformation signals are sent to the controller 3, 63. The controller 3, 63 sends the first deformation signal to the temperature controller 22, 622. Thus, the temperature controller 22, 622 sets the memory alloy layer 21, 621 at the first temperature (namely, high temperature) through the temperature conduction layer 23, 623 according to the first deformation signal. The memory alloy layer 21, 621 is deformed at the two bendable sections 13 so that the mobile terminal 100, 200 is deformed to the wristband capable of being worn on the user's arm. When the memory alloy layer 21, 621 is required to deform from the wristband to the mobile phone having two screens respectively at two opposite sides thereof, the user touches the two bendable sections 13 simultaneously. The flexible touch screen 14, 614 receives the deformation signal according to the touch operation. The deformation signal is sent to the controller 3, 63. The switch is controlled by the controller 3, 63 to detect. The switch produces the sensing signal to the controller 3, 63. On a condition that the driving device 2, 62 determines that the mobile terminal 100, 200 is worn on the human body according to the sensing signal, the controller 3, 63 will block the deformation of the mobile terminal 100, 200. Otherwise, on a condition that the mobile terminal 100, 200 is not worn on the human body, the controller 3, 63 may sends the second deformation signal to the driving device 2, 62 to deform the mobile terminal 100, 200 to the normal state the mobile phone.

The mobile terminal 100, 200 of the present disclosure may automatically perform a bendable deformation cooperating with the controller 3, 63, the temperature controller 22, 622, and the memory alloy layer 21, 621 from one state to another state for example, from the normal mobile terminal to the wearable wristband. Therefore, the application scope of the mobile terminal 100, 200 is enlarged. In addition, the mobile terminal 100, 200 is connected end to end to form the closed ring, which fully utilizes the bendable property of the mobile terminal 100, 200. Thereby, the mobile terminal 100, 200 has a screen at the front surface thereof and a screen at the back surface thereof, that is, the mobile terminal 100, 200 includes a double screen.

The foregoing description merely depicts some exemplary embodiments of the present disclosure and thus is not intended as limiting the scope of the present disclosure. Any variations or substitutions that may be readily thought of by a person skilled in the art in light of the scope of the present disclosure shall all be covered within the protection of the present disclosure. Therefore, the scope of the present disclosure is defined only by the appended claims.

## Claims

1. A mobile terminal, comprising:
a flexible touch screen configured to receive a deformation signal;
a driving device; and
a controller;
wherein the driving device supports the flexible touch screen, and the controller controls the driving device to deform between a first state and a second state according to the deformation signal.

2. The mobile terminal of claim 1, wherein the driving device comprises a temperature controller and a memory alloy layer thermally connected to the temperature controller, and the controller is configured to change a temperature of the temperature controller according to the deformation signal to drive the memory alloy layer to deform between the first state and the second state.

3. The mobile terminal of claim 2, wherein a temperature conduction layer is arranged between the temperature controller and the memory alloy layer.

4. The mobile terminal of claim 2, further comprising a flexible connection layer arranged between the flexible touch screen and the memory alloy layer, wherein the flexible connection layer is configured to prevent heat of the memory alloy layer from transferring to the flexible touch screen.

5. The mobile terminal of claim 4, further comprising a thermal insulation layer arranged between the flexible touch screen and the temperature controller.

6. The mobile terminal of claim 5, wherein the memory alloy layer is arranged between the flexible connection layer and the thermal insulation layer.

7. The mobile terminal of any of claims 2 to 5, wherein the driving device comprises a first portion and a second portion, the first portion is deformable and the second portion is non-deformable, and the first portion of the driving device deforms and the second portion of the driving device remains an original state on a condition that the first state and the second state each are switched towards another.

8. The mobile terminal of claim 7, wherein the memory alloy layer comprises a first portion and a second portion, the first portion of the memory alloy layer is deformable and the second portion of the memory alloy layer is non-deformable, and the first portion of the memory alloy layer deforms and the second portion of the memory alloy layer remains an original state on a condition that the first state and the second state each are switched towards another.

9. The mobile terminal of claim 8, wherein the controller and the temperature controller are arranged at the first portion of the memory alloy layer, and the flexible touch screen covers the first portion and the second portion.

10. The mobile terminal of claim 9, wherein the controller and the temperature controller are respectively arranged at two opposite sides of the first portion of the memory alloy layer, the controller and the temperature controller move away from each other on a condition that the memory alloy layer is deformed from the first state to the second state, and the controller and the temperature controller move toward each other on a condition that the memory alloy layer is deformed from the second state to the first state.

11. The mobile terminal of claim 8, wherein the first portion of the memory alloy layer comprises a pair of straight sections respectively located at an upper portion of the memory alloy layer and a lower portion of the memory alloy layer, and the second portion of the memory alloy layer comprises a pair of bendable sections respectively located at a left portion of the memory alloy layer and a right portion of the memory alloy layer.

12. The mobile terminal of any of claims 1 to 5, further comprising a switch for preventing misoperation, wherein the switch is turned on in the second state and is turned off in the first state.

13. The mobile terminal of claim 12, wherein the controller refuses to execute a deformation instruction after the switch is turned on.

14. The mobile terminal of claim 12, wherein the switch comprises a sensor operable to detect a human body, and the controller determines whether to block the deformation of the driving device on a condition that whether the human body is sensed by the switch.

15. The mobile terminal of claim 9, wherein the switch is a mechanical switch, and on a condition that the first state is switched to the second state, the mechanical switch is automatically turned on.

16. The mobile terminal of claim 1, wherein the mobile terminal is a mobile phone having two screens on two opposite sides thereof in the first state, and the mobile terminal is a wristband in the second state.

17. The mobile terminal of claim 1, wherein the flexible touch screen surrounds the driving device to form a closed ring, and the deformation signal comprises a gesture sliding on two opposite touch surfaces of the flexible touch screen simultaneously.
